# EUROPEAN PATENT SPECIFICATION

(11) **EP 2 218 854 B1**
(45) Date of publication and mention of the grant of the patent: **10.04.2013**
(21) Application number: 10152372.8
(22) Date of filing: 02.02.2010
(51) Int. Cl.: E05D 5/02, F16B 35/04

(54) **System for fastening accessories on frames made of metal material for doors, windows, and the like**
System zur Befestigung von Zubehörteilen auf Rahmen aus Metallmaterialien für Türen, Fenster und Ähnliches
Système de fixation d'accessoire sur des cadres fabriqués en métal pour portes, fenêtres et similaire

(30) Priority: 17.02.2009 IT TO20090022 U
(43) Date of publication of application: 18.08.2010
(73) Proprietor: SAVIO S.p.A., 10050 Chiusa San Michele (Torino) (IT)
(72) Inventor: Balbo di Vinadio, Aimone, 10050 Chiusa San Michele (Torino) (IT)
(74) Representative: Marchitelli, Mauro

(56) References cited:
- EP-A1- 1 398 514
- CA-A1- 2 119 919

## Description

### Field of the invention

The present invention relates in general to fastening systems and regards in particular a system for fastening accessories, such as, for example, hinges, on frames for doors, windows, or the like. An example of such systems, according to the preamble of Claim 1, is known from CA 2 119 919 A1.

### Description of the prior art

A frame for doors, windows, or the like generally comprises a set of profiles, whose section has a series of cavities divided by walls. In general, in order to fasten an accessory to the frame at least one screw that traverses at least two parallel walls of the profile and engages respective coaxial holes of said walls is used.

The frames commonly used are made of reinforced plastic or metallic material, typically aluminium or its alloys, or steel.

From document No. WO 2006/042592 is known a fastening system for a frame made of reinforced plastic material which uses metal screws with a stem made up of two stretches, both threaded, having diameters different from one another. In particular, the first stretch adjacent to the head has a greater diameter than the second stretch. The first stretch traverses a fastening plate of the accessory (for example a hinge) and an outer wall of a profile made of plastic material, whilst the second stretch traverses the remaining internal walls of the profile itself and a metal reinforcement element.

Document No. DE 295 02 068 U1 illustrates a system for fastening accessories on reinforced plastic material frames which uses screws having a stem made up of two stretches, at least one of which is threaded. In particular, the stretch of the stem adjacent to the head has a diameter at least equal to the external diameter of the thread provided on the remaining stretch of the stem. Such stretch may or may not be provided with a thread and may have a cylindrical or conical shape. In the mounting of the accessory, the stretch adjacent to the head of the screw traverses the wall facing the outside of the profile made of plastic material, whilst the remaining stretch of the stem engages an internal wall of the profile itself and the metal reinforcement element. The thread that may be present on the stretch of the stem adjacent to the head of the screw has more than one lead.

Whilst the screws of known type can be advantageously applied to a frame made of reinforced plastic material, their application to frames made of metal material, such as aluminium or its alloys, turn out to be impracticable due to the geometry of the screws and the deformability properties of the material.

### Object of the invention

The present invention has the object of providing a system for fastening accessories on frames for doors, windows, or the like made of metal material, which is able to eliminate any clearance in the coupling, to distribute more uniformly the load on the stretch engaging the screw, and to make the coupling itself more stable.

### Summary of the invention

According to the present invention, said object is achieved by a fastening system that includes screws with such geometrical features as to cause an increase of the engagement surface of the threaded stem of the screw on a wall of the metal profile facing the outside. Thanks to said feature, no modification of the accessories already existing on the market is needed, and there is no variation in the time required for screwing. Furthermore, this solution increases the stability of the coupling.

### Brief description of the drawings

The present invention will now be described in detail with reference to the attached drawings, provided purely by way of non-limiting example, wherein:
- Figure 1 is a perspective view of a fastening system according to the present invention;
- Figure 1A is a side view of a screw used in the fastening system according to the present invention;
- Figure 1B is a perspective view of the screw of Figure 1A;
- Figure 1C is an enlarged view of the detail indicated by the arrow I in Figure 1;
- Figure 1D is a partially sectioned front view of the detail of Figure 1C;
- Figures 2, 2A, 2B, 2C, 2D are equivalent to Figures 1, 1A, 1B, 1C, 1D and illustrate a first variant of the fastening system according to the present invention; and
- Figures 3, 3A, 3B, 3C, 3D are equivalent to Figures 1, 1A, 1B, 1C, 1D and illustrate a second variant of the fastening system according to the present invention.

### Detailed description of the invention

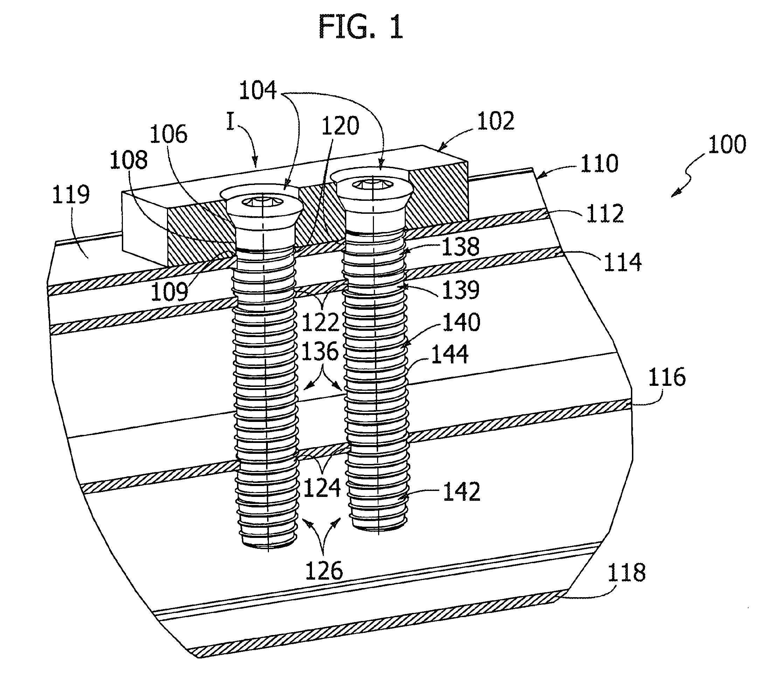

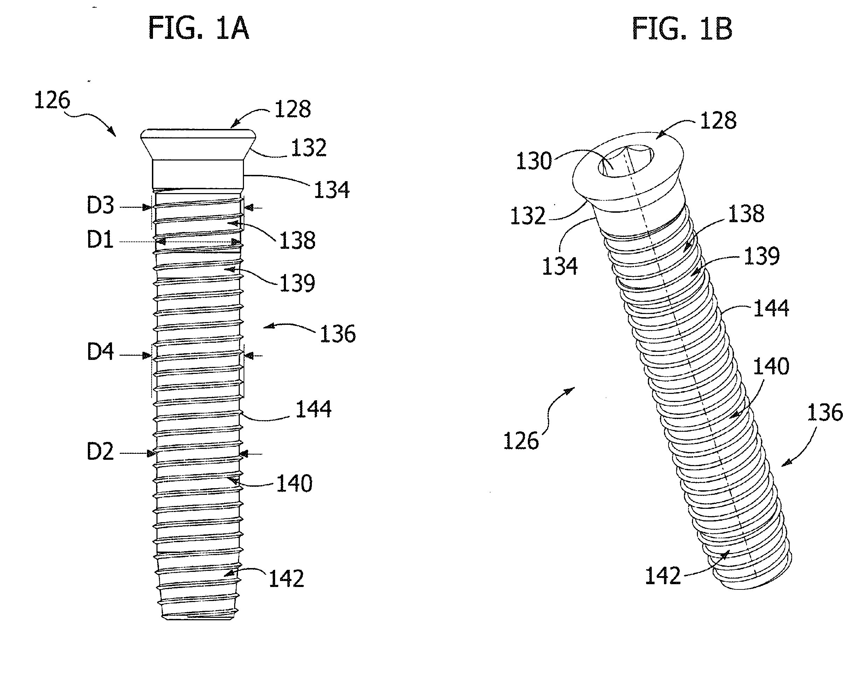

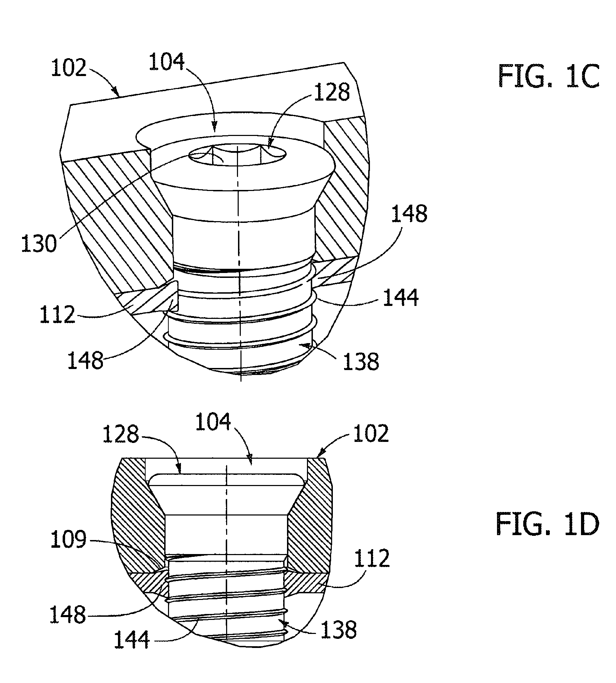

In Figure 1, designated by 100 is a fastening system according to the present invention. The fastening system 100 comprises an accessory 102 having, in this embodiment, a pair of through holes 104. Each through hole 104 comprises a tapered abutment stretch 106, a cylindrical stretch 108, and a terminal flare 109. The accessory 102 is installed on a metal profile 110 forming part of a fixed or mobile frame of a door or window (not illustrated). The metal profile 110, herein partially illustrated only, is an elongated element comprising, in this embodiment, four mutually parallel walls 112, 114, 116, 118. The wall 112 has an outer surface 119, whereon there is fastened the accessory 102. In general, the metal profile 110 comprises at least two mutually parallel walls, one of which carries the accessory 102. The walls 112, 114, 116 are provided, respectively, with pairs of through holes 120, 122, 124 which are coaxial with respect to one another.

Each through hole 104, 120, 122, 124 is traversed by a self-threading fastening screw 126. The fastening screw 126 (Figures 1A, 1B) comprises a manoeuvring head 128, having a hexagonal slot 130, adapted for the insertion of a tool, a tapered abutment surface 132, and a cylindrical centering stretch 134.

The screw 126 moreover comprises a threaded stem 136 integral with the manoeuvring head 128. The threaded stem 136 comprises a plurality of stretches with different features. In particular, the threaded stem 136 comprises an initial stretch 138 adjacent to the manoeuvring head 128, a tapered junction stretch 139, an intermediate stretch 140, and a tapered terminal stretch 142. The stretches 138, 140, 142 have a main thread 144 winding thereon with different external diameters respectively on the tapered terminal stretch 142 and on the stretches 138, 140.

The initial stretch 138 has an increased minor diameter D1 with respect to the minor diameter D2 of the intermediate stretch 140, which is substantially equal to the diameter of the through holes 120, 122, 124. The main thread 144 on the initial stretch 138 has a major diameter D3 equal to the major diameter D4 on the intermediate stretch 140.

Following upon tightening of the fastening screws 126, the accessory 102 is fastened to the metal profile 110, and each through hole 104 is coaxial to the through holes 120, 122, 124. The manoeuvring head 128 is housed in the through hole 104 and fastens the accessory 102 on the outer surface 119 by contact between the tapered abutment stretch 106 and the tapered abutment surface 132. The cylindrical centering stretch 134 engages in the cylindrical stretch 108 of the through hole 104. The initial stretch 138 of the fastening screw 126 with increased minor diameter engages in the through hole 120 of the wall 112 carrying the accessory 102 and possibly in the hole 122 of the wall 114. The intermediate stretch 140 engages in the through hole 124 and possibly in the hole 122 provided on the walls 116 and 114, respectively.

During tightening of each screw 126, each hole 120, 122, 124 is traversed by the intermediate stretch 140 of the threaded stem 136. The intermediate stretch 140 of the threaded stem 136 traverses the holes 120, 122, 124 in succession and creates a corresponding internal thread in each of them.

When, during the advancement of each fastening screw 126 within the metal profile 110, the initial stretch 138 starts traversing the through hole 120 of the wall 112, the initial stretch 138 is in an interference condition with the through hole 120 due to the increased minor diameter.

With reference to Figures 1C, 1D, said interference causes a plastic deformation of the wall of the through hole 120 and a consequent annular upsetting 148 of the metallic material around the through hole 120 itself. The annular upsetting 148, in part facilitated by the flare 109 of the accessory 102 (Figure 1D), increases the engagement surface between the threaded stem 136 and the wall 112 which carries the accessory 102. In particular, the local increase of thickness of the wall 112, caused by annular upsetting 148, offers the fastening screw 126 a greater engagement surface with respect to the walls 114 and 116, which thus favours simultaneous engagement of more turns. In fact the walls 114 and 116, since they do not experience any appreciable deformation, offer as engagement surface only stretches corresponding to their thicknesses.

This, at the same time, enables the elimination of any clearance existing between the screw and the profile, which is due to normal drilling tolerances, thus guaranteeing a greater stability of the fastening system, especially under load.

Evidently, in the case where the stretch 138 also engages the hole 122 of the wall 114, also the latter wall would experience a deformation, with subsequent creation of an annular upsetting of material, and with effects similar to that described for the wall 112.

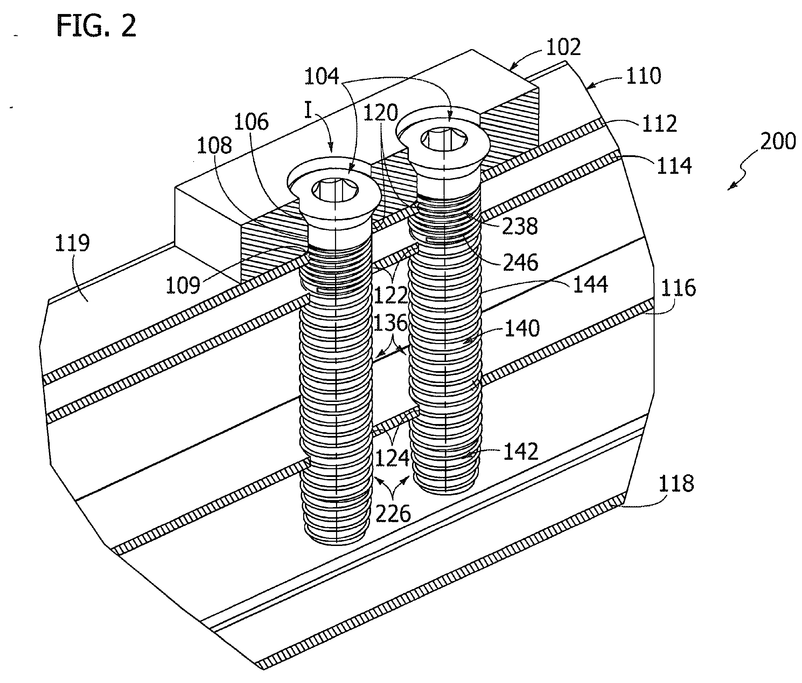

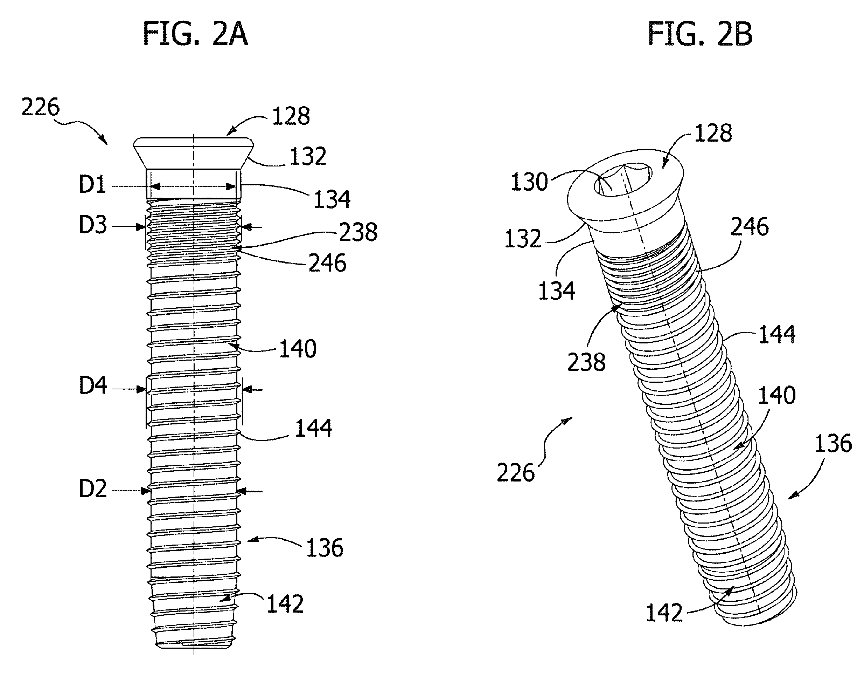

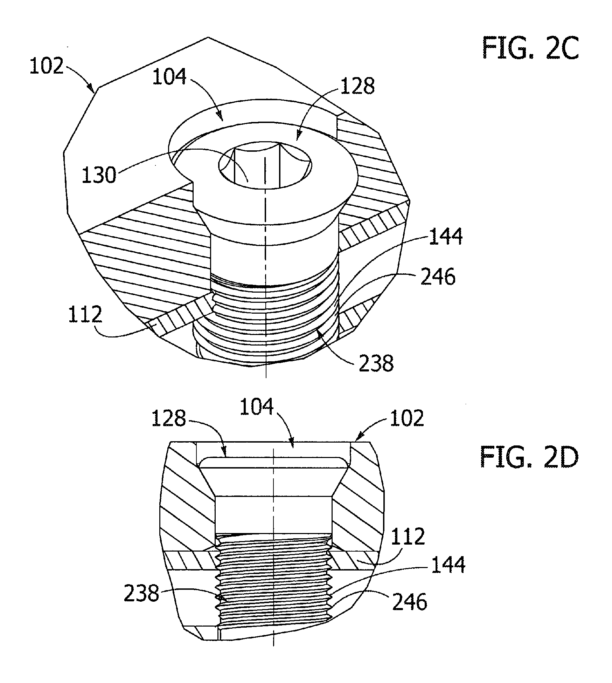

In Figures 2, 2A, 2C, 2D there is illustrated a first variant 200 of the fastening system according to the invention. The components which correspond to the ones previously described are designated by the same numeral references.

In this variant there are provided self-threading fastening screws 226 (Figures 2A, 2B), each of which comprises an initial stretch 238 on which a secondary thread 246 winds. The secondary thread 246 has the same pitch as the main thread 144 and is staggered by half of the pitch with respect to the main thread 144 itself. The secondary thread 246 forms a second lead and has a major diameter D3 equal to the major diameter D4 of the main thread 144 on the intermediate stretch 140. In this variant, there is no increase of the minor diameter D1 of the initial stretch 238 with respect to the minor diameter D2 of the intermediate stretch 140, and the tapered junction stretch 139 is not present.

Similarly to what previously described, the initial stretch 238 engages the wall 112 carrying the accessory 102 and possibly the wall 114, whilst the intermediate stretch 140 engages the wall 116 and possibly the wall 114.

The increase of the engagement surface between the threaded stem 136 and the wall 112 facing the outside and carrying the accessory 102 is provided, in this case, by the simultaneous presence of the main and secondary threads 144, 246 on the initial stretch 238, without any appreciable deformation of the wall 112.

In fact, the initial stretch 238 has, in this way, a substantially double density of turns, and hence, keeping the thickness of the wall 112 unchanged, twice the number, or in any case a greater number of turns can engage the through hole 120.

Evidently, in the case where the stretch 238 also engages the hole 122 of the wall 114, the latter wall would not experience any deformation but the increased engagement surface would of course be provided by the simultaneous presence of threads 144, 246 on the initial stretch 238, with similar effects to what described for the wall 112.

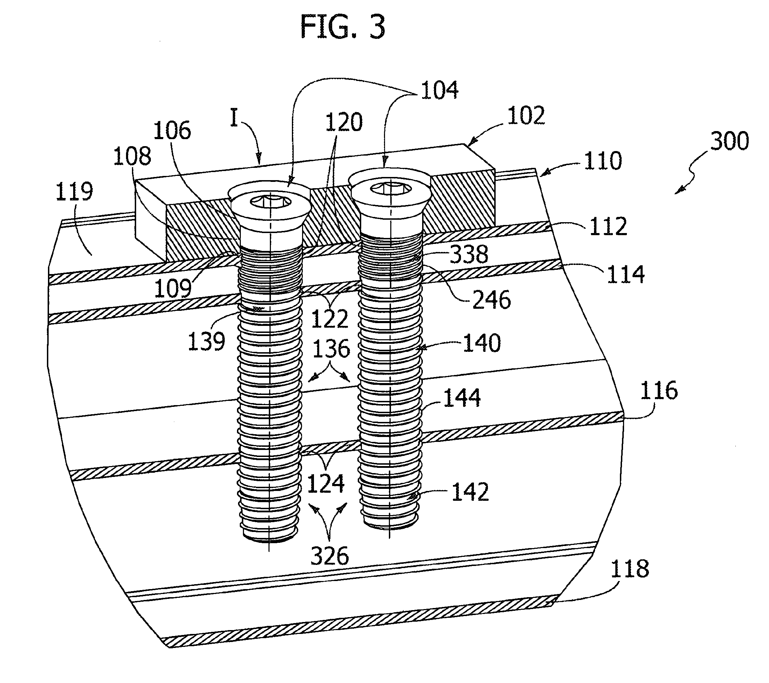

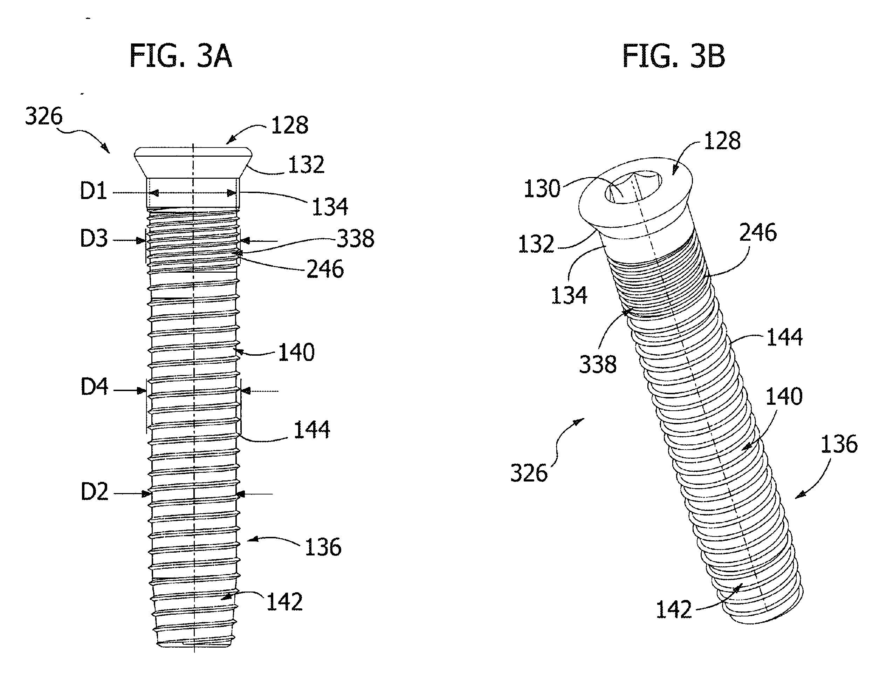

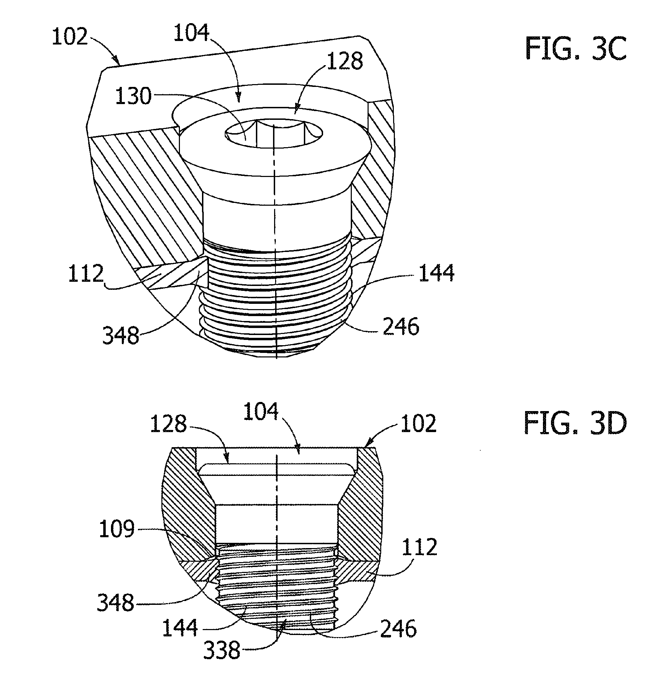

In Figures 3, 3A, 3B, 3C, 3D there is illustrated a second variant 300 of the fastening system according to the invention. Provided in this second variant are fastening screws 326, which are also self-threading ones.

The threaded stem 136 of each screw 326 comprises an initial stretch 338, connected by means of the tapered stretch 139 to the intermediate stretch 140.

The main thread 144, as previously described, winds on the stretches 338, 140 and 142 with different major diameters on the tapered terminal stretch 142 and on the stretches 338, 140. Moreover the secondary thread 246 winds on the stretch 338, forming a second lead and having a major diameter D3 equal to the major diameter D4 of the main thread 144 on the intermediate stretch 140.
Furthermore, in this second variant, as in the fastening screw 126, the minor diameter D1 of the initial stretch 338 is increased with respect to the minor diameter D2 of the intermediate stretch 140.

The fastening screw 326 is hence a combination of the characteristics of the fastening screws 126 and 226 and maintains, combining them, the advantages described previously.

In fact, each screw 326 engages through the accessory 102 and the metal profile 110 with the stretch 338 engaging the wall 112 and possibly the wall 114, and the intermediate stretch 140 engaging the wall 116 and possibly the wall 114 of the metal profile 110. The increase of the engagement surface between the threaded stem 136 and the metal profile 110 is obtained in this case due to the combined action of the increased minor diameter of the initial stretch 338 and of the simultaneous presence of the main and secondary threads 144, 246 on the initial stretch 338 itself. In fact, during tightening of each screw 326 within the metal profile 110, when the advancement of the threaded stem 136 within the metal profile 110 is such that the initial stretch 338 engages the wall 112, the interference existing between the through hole 120 and the initial stretch 338 creates an annular upsetting of material 348, which locally increases the thickness of the wall 112 and hence favours simultaneous engagement of more turns. Furthermore, together with the increase of the local thickness of the wall 112, the density of turns, which is substantially twice that of the initial stretch 338 enables having a number of engaging turns that is twice as much, or in any case greater.

In this way, the effects of the screws 126 and 226 are combined, so obtaining a fastening screw 326 that maintains, amplifying them, all the characteristics of stability of the coupling already present in the fastening screws 126 and 226.

Evidently, in the case where the stretch 338 also engages the hole 122 of the wall 114, also the latter wall would experience a deformation, with consequent creation of annular upsetting of material and with effects similar to what has been described for the wall 112.

In brief, the fastening screws 126, 226, 326, have a threaded stem with common structure. In fact, the threaded stem 136 has a stretch adjacent to the manoeuvring head 128 shaped in such a way as to increase the engagement surface between the threaded stem and the wall 112 facing the outside, which carries the accessory 102.

The ratio between the length of the initial stretch 138, 238, 338 and the total length of the threaded stem 136 is constant for each fastening screw 126, 226, 326 and comprised between 0.06 and 0.38.

Furthermore, in the case of the fastening screws 126 and 326, the ratio between the increased minor diameter D1 of the stretches 138 and 338 and the minor diameter D2 of the intermediate stretch 140 is constant and comprised, in general, between 1.02 and 1.11.

Finally, the ratio between the pitch of the main thread 144 of each fastening screw 126, 226, 326 and the thickness of the wall 112 is generally comprised between 0.46 and 1.67. Note moreover that, in the case of simultaneous presence of the main and secondary threads 144, 246, the apparent pitch is halved and consequently also its ratio with respect to the thickness of the wall 112 is halved.

Of course, without prejudice to the principle of the invention, the details of construction and the embodiments may vary widely with respect to what is described and illustrated herein purely by way of example, without thereby departing from the scope of the present invention, as defined by the annexed claims.

## Claims

1. A fastening system of an accessory (102) to a metal frame for doors, windows, or the like comprising:
- at least one metal profile (110) including at least two parallel walls (112, 114, 116, 118), at least one of which has an outer surface (119) whereon said accessory (102) is fastened, and
- at least one self-threading fastening screw (126, 326), including a manoeuvring head (128) and a threaded stem (136) whereon a main thread (144) engaging in coaxial through holes (120, 122, 124) of said parallel walls (112, 114, 116) winds,
said threaded stem (136) comprising :
- an initial stretch (138, 338), adjacent to said manoeuvring head (128) and whereon said main thread (144) winds, said initial stretch (138, 338) being shaped for increasing the engagement surface between said threaded stem (136) and said wall (112) carrying the accessory (102), and
- an intermediate stretch (140),
the fastening system being **characterized in that** said initial stretch (138, 338) of the threaded stem (136) has a minor diameter (D1) increased with respect to the minor diameter (D2) of said intermediate stretch (140) and **in that** said main thread (144) winds on said initial stretch (138, 338) with major diameter (D3) equal to the major diameter (D4) on said intermediate stretch (140).

2. The fastening system according to Claim 1, **characterized in that** said threaded stem (136) moreover comprises a tapered terminal stretch (142), whereon said main thread (144) winds with different major diameters on the tapered terminal stretch (142) and on the intermediate and initial stretches (140, 138, 338).

3. The fastening system according to any one of the preceding claims, **characterized in that** said initial stretch (338) of the threaded stem (136) comprises a secondary thread (246) with pitch and major diameter (D3) identical to the pitch and major diameter (D4) of the main thread (144) and staggered, with respect to said main thread (144), by half of said pitch.

4. A fastening system of an accessory (102) to a metal frame for doors, windows, or the like comprising:
- at least one metal profile (110) including at least two parallel walls (112, 114, 116, 118), at least one of which has an outer surface (119) whereon said accessory (102) is fastened, and
- at least one self-threading fastening screw (226, 326), including a manoeuvring head (128) and a threaded stem (136) whereon a main thread (144) engaging in coaxial through holes (120, 122, 124) of said parallel walls (112, 114, 116) winds,
said threaded stem (136) comprising an initial stretch (238, 338), adjacent to said manoeuvring head (128) and whereon said main thread (144) winds, said initial stretch (238, 338) being shaped for increasing the engagement surface between said threaded stem (136) and said wall (112) carrying the accessory (102),
the fastening system being **characterized in that** said initial stretch (238, 338) of the threaded stem (136) comprises a secondary thread (246) with pitch and major diameter (D3) identical to the pitch and major diameter (D4) of the main thread (144) and staggered, with respect to said main thread (144), by half of said pitch.

5. The fastening system according to Claim 4, **characterized in that** said threaded stem (136) moreover comprises an intermediate stretch (140) and a tapered terminal stretch (142), whereon said main thread (144) winds with different major diameters on the tapered terminal stretch (142) and on the intermediate and initial stretches (140, 238, 338).

6. The fastening system according to any of the previous claims, **characterized in that** the ratio between the length of the initial stretch (138, 338) and the total length of the threaded stem (136) is comprised between 0.06 and 0.38.

7. The fastening system according to any of the previous claims, **characterized in that** the ratio between the increased minor diameter (D1) of the initial stretch (138, 338) and the minor diameter (D2) of the intermediate stretch (140) is comprised between 1.02 and 1.11.

8. The fastening system according to any of the previous claims, **characterized in that** the ratio between the pitch of the main thread (144) and the thickness of said wall (112) carrying the accessory (102) is comprised between 0.46 and 1.67.

## Patentansprüche

1. Befestigungssystem eines Zubehörteils (102) an einem Metallrahmen für Türen, Fenster oder dergleichen, mit:
- mindestens einem Metallprofil (110), das mindestens zwei parallele Wände (112, 114, 116, 118) hat, von denen mindestens eine eine äußere Oberfläche (119) hat, worauf das Zubehörteil (102) befestigt ist, und
- mindestens einer selbstschneidenden Befestigungsschraube (126, 326), die einen Manövrierkopf (128) und einen Gewindezapfen (136) hat, worauf sich ein Hauptgewinde (144), das in koaxiale Durchgangslöcher (120, 122, 124) der parallelen Wände (112, 114, 116) eingreift, windet, wobei der Gewindezapfen (136) aufweist:
- eine Anfangsstrecke (138, 338) neben dem Manövrierkopf (128) und worauf sich das Hauptgewinde (144) windet, wobei die Anfangsstrecke (138, 338) geformt ist, um die Eingriffsoberfläche zwischen dem Gewindezapfen (136) und der Wand (112), die das Zubehörteil (102) trägt, zu erhöhen, und
- eine Zwischenstrecke (140),
wobei das Befestigungssystem **dadurch gekennzeichnet ist, dass** die Anfangsstrecke (138, 338) des Gewindezapfens (136) einen Kerndurchmesser (D1) aufweist, der bezüglich des Kerndurchmessers (D2) der Zwischenstrecke (140) erhöht ist, und dadurch, dass das Hauptgewinde (144) sich auf der Anfangsstrecke (138, 338) mit einem Außendurchmesser (D3) gleich dem Außendurchmesser (D4) auf der Zwischenstrecke (140) windet.

2. Befestigungssystem nach Anspruch 1, **dadurch gekennzeichnet, dass** der Gewindezapfen (136) überdies eine konische Endstrecke (142) aufweist, worauf sich das Hauptgewinde (144) mit unterschiedlichen Außendurchmessern auf der konischen Endstrecke (142) und der Zwischen- sowie Anfangsstrecke (140, 138, 338) windet.

3. Befestigungssystem nach einem der vorherigen Ansprüche, **dadurch gekennzeichnet, dass** die Anfangsstrecke (338) des Gewindezapfens (136) ein Sekundärgewinde (246) mit Steigung und Außendurchmesser (D3) gleich der Steigung und dem Außendurchmesser (D4) des Hauptgewindes (144) und bezüglich des Hauptgewindes (144) um die halbe Steigung versetzt aufweist.

4. Befestigungssystem eines Zubehörbauteils (102) an einen Metallrahmen für Türen, Fenster oder dergleichen, mit:
- mindestens einem Metallprofil (110), das mindestens zwei parallele Wände (112, 114, 116, 118) hat, von denen mindestens eine eine äußere Oberfläche (119) hat, worauf das Zubehörteil (102) befestigt ist, und
- mindestens einer selbstschneidenden Befestigungsschraube (226, 326), die einen Manövrierkopf (128) und einen Gewindezapfen (136) hat, worauf sich ein Hauptgewinde (144), das in koaxiale Durchgangslöcher (120, 122, 124) der parallelen Wände (112, 114, 116) eingreift, windet, wobei der Gewindezapfen (136) aufweist:
- eine Anfangsstrecke (238, 338) neben dem Manövrierkopf (128) und worauf sich das Hauptgewinde (144) windet, wobei die Anfangsstrecke (238, 338) geformt ist, um die Eingriffsoberfläche zwischen dem Gewindezapfen (136) und der Wand (112), die das Zubehörteil (102) trägt, zu erhöhen,
wobei das Befestigungssystem **dadurch gekennzeichnet ist, dass** die Anfangsstrecke (238, 338) des Gewindezapfens (136) ein Sekundärgewinde (246) mit Steigung und Außendurchmesser (D3) gleich der Steigung und dem Außendurchmesser (D4) des Hauptgewindes (144) und bezüglich des Hauptgewindes (144) um die halbe Steigung versetzt aufweist.

5. Befestigungssystem nach Anspruch 4, **dadurch gekennzeichnet, dass** der Gewindezapfen (136) überdies eine konische Endstrecke (142) aufweist, worauf sich das Hauptgewinde (144) mit unterschiedlichen Außendurchmessern auf der konischen Endstrecke (142) und der Zwischen- sowie Anfangsstrecke (140, 238, 338) windet.

6. Befestigungssystem nach einem der vorhergehenden Ansprüche, **dadurch gekennzeichnet, dass** das Verhältnis zwischen der Länge der Anfangsstrecke (138, 338) und der Gesamtlänge des Gewindezapfens (136) zwischen 0,06 und 0,38 liegt.

7. Befestigungssystem nach einem der vorhergehenden Ansprüche, **dadurch gekennzeichnet, dass** das Verhältnis zwischen dem vergrößerten Kerndurchmesser (D1) der Anfangsstrecke (138, 338) und dem Kerndurchmesser (D2) der Zwischenstrecke (140) zwischen 1,02 und 1,11 liegt.

8. Befestigungssystem nach einem der vorhergehenden Ansprüche, **dadurch gekennzeichnet, dass** das Verhältnis zwischen der Steigung des Hauptgewindes (144) und der Dicke der Wand (112), die das Zubehörbauteil (102) trägt, zwischen 0,46 und 1,67 liegt.

## Revendications

1. Système de fixation d'un accessoire (102) sur un châssis métallique pour portes, fenêtres ou similaires comprenant :
au moins un profil métallique (110) comprenant au moins deux parois parallèles (112, 114, 116, 118), dont au moins l'une a une surface externe (119) sur laquelle ledit accessoire (102) est fixé, et
au moins une vis de fixation auto-foreuse (126, 326), comprenant une tête de manoeuvre (128) et une tige filetée (136) sur laquelle un filetage principal (144) se mettant en prise dans des trous de passage coaxiaux (120, 122, 124) desdites parois parallèles (112, 114, 116) s'enroule ;
ladite tige filetée (136) comprenant :
un tronçon initial (138, 338), adjacent à ladite tête de manoeuvre (128) et sur lequel ledit filetage principal (144) s'enroule, ledit tronçon initial (138, 338) étant formé pour augmenter la surface de mise en prise entre ladite tige filetée (136) et ladite paroi (112) portant l'accessoire (102), et
un tronçon intermédiaire (140),
le dispositif de fixation étant **caractérisé en ce que** ledit tronçon initial (138, 338) de la tige filetée (136) a un diamètre mineur (D1) augmenté par rapport au diamètre mineur (D2) dudit tronçon intermédiaire (140) et **en ce que** ledit filetage principal (144) s'enroule sur ledit tronçon initial (138, 338) avec le diamètre majeur (D3) égal au diamètre majeur (D4) sur ledit tronçon intermédiaire (140).

2. Système de fixation selon la revendication 1, **caractérisé en ce que** ladite tige filetée (136) comprend de plus un tronçon terminal progressivement rétréci (142), sur lequel ledit filetage principal (144) s'enroule avec des diamètres majeurs différents sur le tronçon terminal progressivement rétréci (142) et sur les tronçons intermédiaire et initial (140, 138, 338).

3. Système de fixation selon l'une quelconque des revendications précédentes, **caractérisé en ce que** ledit tronçon principal (338) de la tige filetée (136) comprend un filetage secondaire (246) avec le pas et le diamètre majeur (D3) identiques au pas et au diamètre majeur (D4) du filetage principal (144) et en quinconce par rapport audit filetage principal (144), de la moitié dudit pas.

4. Système de fixation d'un accessoire (102) sur un châssis métallique pour portes, fenêtres ou similaires comprenant :
au moins un profil métallique (110) comprenant au moins deux parois parallèles (112, 114, 116, 118), dont au moins l'une a une surface externe (119) sur laquelle ledit accessoire (102) est fixé, et
au moins une vis de fixation auto-foreuse (226, 326) comprenant une tête de manoeuvre (128) et une tige filetée (136) sur laquelle un filetage principal (144) se mettant en prise dans des trous de passage coaxiaux (120, 122, 124) desdites parois parallèles (112, 114, 116) s'enroule,
ladite tige filetée (136) comprenant un tronçon initial (238, 338), adjacent à ladite tête de manoeuvre (128) et sur lequel ledit filetage principal (144) s'enroule, ledit tronçon initial (238, 338) étant formé pour augmenter la surface de mise en prise entre ladite tige filetée (136) et ladite paroi (112) portant l'accessoire (102),
le système de fixation étant **caractérisé en ce que** ledit tronçon initial (238, 338) de la tige filetée (136) comprend un filetage secondaire (246) avec le pas et le diamètre majeur (D3) identiques au pas et au diamètre majeur (D4) du filetage principal (144) et en quinconce, par rapport audit filetage principal (144), de la moitié dudit pas.

5. Système de fixation selon la revendication 4, **caractérisé en ce que** ladite tige filetée (136) comprend en outre un tronçon intermédiaire (140) et un tronçon terminal progressivement rétréci (142) sur lequel ledit filetage principal (144) s'enroule avec des diamètres majeurs différents sur le tronçon terminal progressivement rétréci (142) et sur les tronçons intermédiaire et initial (140, 238, 338).

6. Système de fixation selon l'une quelconque des revendications précédentes, **caractérisé en ce que** le rapport entre la longueur du tronçon initial (138, 338) et la longueur totale de la tige filetée (136) est compris entre 0,06 et 0,38.

7. Système de fixation selon l'une quelconque des revendications précédentes, **caractérisé en ce que** le rapport entre le diamètre mineur (D1) augmenté du tronçon initial (138, 338) et le diamètre mineur (D2) du tronçon intermédiaire (140) est compris entre 1.02 et 1.11.

8. Système de fixation selon l'une quelconque des revendications précédentes, **caractérisé en ce que** le rapport entre le pas du filetage principal (144) et l'épaisseur de ladite paroi (112) comprenant l'accessoire (102) est compris entre 0.46 et 1.67.
